# EUROPÄISCHE PATENTANMELDUNG

(11) **EP 4 269 027 A1**
(43) Veröffentlichungstag der Anmeldung: **01.11.2023**
(21) Anmeldenummer: 22169958.0
(22) Anmeldetag: 26.04.2022
(51) Int. Cl.: B24B 55/05, B25F 5/02, B23Q 11/08

(54) **SCHUTZHAUBE FÜR EINE WERKZEUGMASCHINE MIT EINEM ROTIERENDEN, SCHEIBENFÖRMIGEN WERKZEUG UND WERKZEUGMASCHINE**

(71) Anmelder: Hilti Aktiengesellschaft, 9494 Schaan (LI)
(72) Erfinder: Meuer, Roland, 86833 Ettringen (DE); Blatz, Thomas, 86899 Landsberg am Lech (DE)
(74) Vertreter: Hilti Aktiengesellschaft Corporate Intellectual Property

(57) **Zusammenfassung**

Die Erfindung betrifft eine Schutzhaube für eine Werkzeugmaschine mit einem rotierenden, scheibenförmigen Werkzeug, wobei die Schutzhaube dazu eingerichtet ist, eine erste Drehbewegung und eine zweite Drehbewegung auszuführen, wobei die erste Drehbewegung reibgelagert erfolgt und die zweite Drehbewegung gleitgelagert erfolgt. Dazu kann die Schutzhaube ein erstes Drehlager und ein zweites Drehlager umfassen, wobei das erste Drehlager als Reiblager ausgebildet ist und das zweite Drehlager als Gleitlager ausgebildet ist. Die Anbindung der Schutzhaube an die Werkzeugmaschine ist insbesondere so beschaffen, dass die Schutzhaube zwei unterschiedliche Drehbewegungen ausführen kann. Auf diese Weise kann ein überraschend großer Bereich des rotierenden Werkzeugs abgedeckt und der Nutzer der Werkzeugmaschine optimal gegenüber Verletzungen geschützt werden. In einem zweiten Aspekt betrifft die Erfindung eine Werkzeugmaschine mit einer solchen Schutzhaube.

## Beschreibung

Die Erfindung betrifft eine Schutzhaube für eine Werkzeugmaschine mit einem rotierenden, scheibenförmigen Werkzeug, wobei die Schutzhaube dazu eingerichtet ist, eine erste Drehbewegung und eine zweite Drehbewegung auszuführen, wobei die erste Drehbewegung reibgelagert erfolgt und die zweite Drehbewegung gleitgelagert erfolgt. Dazu kann die Schutzhaube ein erstes Drehlager und ein zweites Drehlager umfassen, wobei das erste Drehlager als Reiblager ausgebildet ist und das zweite Drehlager als Gleitlager ausgebildet ist. Die Anbindung der Schutzhaube an die Werkzeugmaschine ist insbesondere so beschaffen, dass die Schutzhaube zwei unterschiedliche Drehbewegungen ausführen kann. Auf diese Weise kann ein überraschend großer Bereich des rotierenden Werkzeugs abgedeckt und der Nutzer der Werkzeugmaschine optimal gegenüber Verletzungen geschützt werden. In einem zweiten Aspekt betrifft die Erfindung eine Werkzeugmaschine mit einer solchen Schutzhaube.

### Hintergrund der Erfindung:

Im Stand der Technik sind Werkzeugmaschinen bekannt, die als Werkzeuge rotierende Werkzeuge aufweisen. Beispielsweise sind Werkzeugmaschinen, wie Schleif- oder Trenngeräte bekannt, die scheibenförmige Werkzeuge, wie Schleif- oder Trennscheiben aufweisen. Die genannten Werkzeuge stellen rotierende Werkzeuge dar, die dich um eine Dreh- oder Rotationsachse drehen können, wobei die Drehachse im Wesentlichen parallel oder senkrecht zu einer Drehachse des Motors der Werkzeugmaschine orientiert vorliegen kann.

Im Stand der Technik sind zum Schutz des Nutzers einer solchen Werkzeugmaschine mit rotierendem Werkzeug sog. Schutzhauben oder Schutzvorrichtungen bekannt, die entweder starr an der Werkzeugmaschine angebracht vorliegen oder so angebunden sind, dass sie um eine Achse des Werkzeugs gedreht werden können, um einen Schnitt optimal ausführen zu können. Um einen größeren Bereich des Werkzeugs abdecken zu können, werden häufig zusätzliche Schutzelemente verbaut, die beispielsweise verschoben, geklappt oder anderweitig bewegt werden können. Solche zusätzlichen Schutzelemente können beispielsweise fächerartig ausgebildet sein, wobei die einzelnen Komponenten einer solchen Fächerkonstruktion oftmals ineinandergeschoben werden können.

Es ist bekannt, dass bei Werkzeugmaschinen mit rotierendem Werkzeug Kickback-Ereignisse auftreten können, die eine Gefährdung für den Nutzer der Werkzeugmaschine darstellen können. Der Begriff "Kickback-Ereignis" beschreibt im Sinne der Erfindung bevorzugt solche Ereignisse, bei denen während der Bearbeitung eines Untergrundes oder eines Werkstücks ein plötzlicher und unerwarteter Rückschlag der Werkzeugmaschine in Richtung des Nutzers der Werkzeugmaschine auftritt. Solche Kickback-Ereignisse können beispielsweise dann auftreten, wenn sich das Werkzeug, beispielsweise eine Trennscheibe, in dem zu bearbeitenden Untergrund verklemmt. Es kann dann zu einer heftigen, unerwarteten Kraft zwischen der Werkzeugmaschine und dem Untergrund kommen, durch die die Werkzeugmaschine - häufig in Richtung des Nutzers - eine starke Beschleunigung erfährt. Solche als "Kickback" bezeichnete Ereignisse können zu Verletzungen des Nutzers der Werkzeugmaschine führen und sie stellen eine Beeinträchtigung der Betriebssicherheit dar.

Schutzhauben für Werkzeugmaschine sollen die Aufgabe erfüllen, den Nutzer vor Verletzungen durch die Werkzeugmaschine bzw. ihr Werkzeug bei solchen Kickback-Ereignissen zu schützen. Bisher im Stand der Technik bekannte Konstruktionen zum Schutz des Nutzers weisen häufig mindestens zwei bewegliche Schutzelemente, wie Haubenelemente oder Zusatzelemente, auf. Die Beweglichkeit solcher beweglicher Schutzelemente in konventionellen Schutzhauben kann allerdings durch den Kontakt mit Staub und Feuchtigkeit beeinträchtigt werden. Dadurch kann die Funktionstüchtigkeit der Schutzhaube beeinträchtigt werden, so dass ein Sicherheitsrisiko für den Nutzer entstehen kann.

Aufgabe der vorliegenden Erfindung ist es daher, die vorstehend beschriebenen Mängel und Nachteile des Standes der Technik zu überwinden und verbesserte Staubhaube für eine Werkzeugmaschine und eine Werkzeugmaschine mit einer solchen Schutzhaube bereitzustellen, die besonders gut unter Baustellenbedingungen eingesetzt werden können und die robust gegenüber Staub und Feuchtigkeit sind, so dass auch unter den genannten "rauhen Bedingungen" eine hohe Betriebssicherheit und ein guter Schutz des Nutzers der Werkzeugmaschine gewährleistet ist.

Die Aufgabe wird gelöst durch den Gegenstand der unabhängigen Ansprüche. Vorteilhafte Ausführungsformen des erfindungsgemäßen Gegenstands werden in den abhängigen Ansprüchen beschrieben.

### Beschreibung der Erfindung:

Die Aufgabe wird dabei durch eine Schutzhaube für eine Werkzeugmaschine mit einem rotierenden, scheibenförmigen Werkzeug gelöst, wobei die Schutzhaube dazu eingerichtet ist, eine erste Drehbewegung und eine zweite Drehbewegung auszuführen, wobei die erste Drehbewegung reibgelagert erfolgt und die zweite Drehbewegung gleitgelagert erfolgt. Diese unterschiedlichen, sich überlagernden Drehbewegungen der Schutzhaube werden insbesondere dadurch ermöglicht, dass die Schutzhaube eine erstes Drehlager und ein zweites Drehlager umfasst, wobei das erste Drehlager als Reiblager ausgebildet ist und das zweite Drehlager als Gleitlager ausgebildet ist. Damit ermöglicht die erfindungsgemäße Schutzhaube nicht nur die üblichen Einstellmöglichkeiten einer Schutzhaube, sondern sie kann vorteilhafterweise einen überlagerten angefederten Schwenkbereich bereitstellen, um den in einem Kickback-Fall exponierten bzw. für einen Nutzer gefährlichen Bereich des Werkzeugs der Werkzeugmaschine vorzugsweise dynamisch abzudecken. Dadurch kann eine zusätzliche Schutzfunktion ermöglicht werden, die deutlich über den Schutz hinausgeht, den konventionelle Schutzhauben, wie sie aus dem Stand der Technik bekannt sind, bereitstellen können. Zur Bereitstellung der zusätzlichen Schutzfunktion sind vorteilhafterweise keine separaten Elemente erforderlich, sondern die Staubhaube ist vorzugsweise einteilig ausgebildet. Der Begriff "einteilig" bedeutet im Sinne der Erfindung vorzugsweise, dass die Schutzhaube keine fächerartigen Komponenten oder weiteren Schwenkteile aufweist, sondern dass die Abdeckung des scheibenfömigen Werkzeugs der Werkzeugmaschine durch ein Schutzhaubenelement erfolgt, das die Schutzhaube bildet. Dadurch kann bei der vorgeschlagenen Schutzhaube die Anzahl der beweglichen Teile im Vergleich zum Stand der Technik reduziert werden. Dies ermöglicht die Schaffung einer besonders langlebigen und betriebssicheren Staubhaube, die insbesondere robust gegenüber Staub und Feuchtigkeit ist. Dadurch kann die vorgeschlagene Staubhaube vor allem auch unter Baustellenbedingungen sicher verwendet werden.

Die vorgeschlagene Schutzhaube ist mit dem Vorteil verbunden, dass die Schutzhaube nur ein bewegliches Bauteil aufweist, um die Schutzfunktion bei Auftreten eines Kickback-Ereignisses für den Nutzer zu gewährleisten. Vorteilhafterweise wird im Kontext der Erfindung die Schutzfunktion nicht durch ein zusätzliches Haubenelement bereitgestellt, sondern durch eine überlagerte Drehbewegung des bevorzugt einteilig ausgebildeten Schutzhaubenelements. Damit wendet sich die Erfindung vom Stand der Technik ab, der bisher davon ausgegangen war, dass solche zusätzliches Haubenelement, die beispielsweise fächerartig ausgebildet sind, zwingend erforderlich sind, um einen wirksamen Schutz durch eine Schutzhaube zu ermöglichen.

Es ist im Sinne der Erfindung bevorzugt, dass die Schutzhaube über ein Reibelement gerade noch drehbar am Gerät befestigt vorliegt. Vorzugsweise kann die Schutzhaube bzw. ihr Schutzhaubenelement an der Werkzeugmaschine ge- bzw. verklemmt vorliegen. Diese Lagerung wird im Kontext der vorliegenden Erfindung verwendet, um die Werkzeugmaschine an die jeweilige Arbeitsposition anzupassen. Die entsprechende reibgelagerte Drehbewegung der Schutzhaube wird im Sinne der Erfindung bevorzugt als erste Drehbewegung bezeichnet. Darüber hinaus ist die Schutzhaube dazu eingerichtet, eine zweite Drehbewegung auszuführen, die vorzugsweise über ein Gleitelement gelagert und/oder angefedert ist. Diese gleitgelagerte Drehbewegung der Schutzhaube wird im Sinne der Erfindung bevorzugt als zweite Drehbewegung bezeichnet. Die vorgeschlagene Schutzhaube unterscheidet sich somit von konventionellen Schutzhauben, wie sie aus dem Stand der Technik bekannt sind, dadurch, dass die Schutzhaube nur ein bewegliches Schutzhaubenelement aufweist, sowie darüber hinaus zwei Drehlager. Dabei ist ein erstes Drehlager als Reiblager ausgebildet, so dass eine reibgelagerte erste Drehbewegung der Staubhaube ermöglicht wird, während ein zweites Drehlager als Gleitlager ausgebildet ist, so dass eine gleitgelagerte zweite Drehbewegung der Staubhaube ermöglicht wird. Bei den Bewegungen kann insbesondere das Schutzhaubenelement der Schutzhaube verstellt werden. Die erste Drehbewegung und die zweite Drehbewegung erfolgen vorzugsweise um denselben Drehpunkt, wobei dieser Drehpunkt bevorzugt auch der Werkzeugachse der Werkzeugmaschine entspricht. Das bedeutet im Sinne der Erfindung bevorzugt, dass die Drehachse des Werkzeugs der Werkzeugmaschine durch den Drehpunkt verläuft, der vorzugsweise der Mittelpunkt der ersten und der zweiten Drehbewegung der Schutzhaube ist.

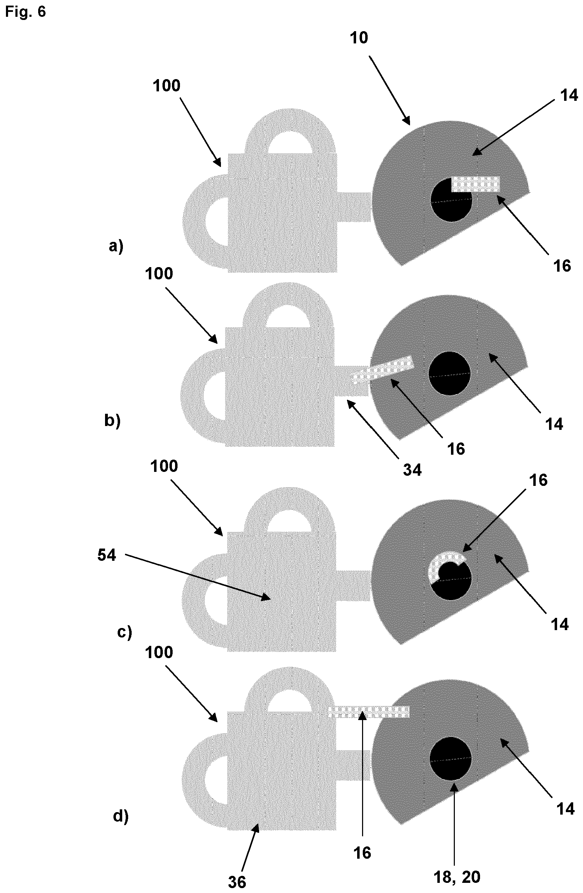

Es ist im Sinne der Erfindung bevorzugt, dass die Schutzhaube dazu eingerichtet ist, ein Federelement aufzunehmen, wobei die Schutzhaube ein drehbares Element zur Positionierung der Schutzhaube und ein Lagerelement umfasst, wobei das Lagerelement eine Drehachse für das drehbare Element umfasst und das Federelement dazu eingerichtet ist, eine Relativbewegung zwischen der Schutzhaube und dem drehbaren Element zu bewirken. Der Begriff "Federelement" wird im Sinne der Erfindung bevorzugt als Oberbegriff für Federelemente und andere, denkbare Aktuatoren verstanden. Es sollen daher nicht nur Federelemente unter dem Begriff verstanden werden, sondern auch andere Aktuatoren, die die Aufgabe des Federelements erfüllen können. Es ist im Sinne der Erfindung ganz besonders bevorzugt, dass die Schutzhaube ein Schutzhaubenelement zur Aufnahme des Federelements aufweist. Dazu kann das Schutzhaubenelement insbesondere eine Nut aufweisen, in der das Federelement angeordnet vorliegen kann. Es ist im Sinne der Erfindung bevorzugt, dass das drehbare Element zur Positionierung der Schutzhaube eine zweite Lagerung bzw. eine Drehachse der bevorzugt gefederten Schutzhaube darstellt. Die erste Lagerung bzw. die erste Drehachse entspricht vorzugsweise der Drehachse des Werkzeugs der Werkzeugmaschine. Die Drehachse des Werkzeugs kann im Sinne der Erfindung bevorzugt auch als Geräteachse bezeichnet werden, wobei die Geräteachse der ersten Lagerung bzw. Drehachse für das drehbare Element zur Haubenpositionierung entspricht. Es kann im Sinne der Erfindung aber auch bevorzugt sein, auf eine Nut zu verzichten und stattdessen das Federelement auf einer Außenseite der Schutzhaube anzubringen. Wenn das Federelement in der Nut angeordnet vorliegt, stellt das Federelement vorzugsweise keine Verbindung zur Werkzeugmaschine her. Wenn das mindestens eine Federelement jedoch in einer anderen Position als in der Nut angeordnet vorliegt, kann das Federelement dazu eingerichtet sein, eine direkte Verbindung zur Werkzeugmaschine herzustellen. Die bevorzugt direkten Verbindungen können insbesondere dadurch hergestellt werden, dass das mindestens eine Federelement an korrespondierenden Positionen der Werkzeugmaschine angreift. Verschiedene mögliche Positionen des Federelements sind beispielsweise in Figur 6 dargestellt. Es ist im Sinne der Erfindung bevorzugt, dass die Schutzhaube über das mindestens eine Federelement mit der Werkzeugmaschine verbunden vorliegt.

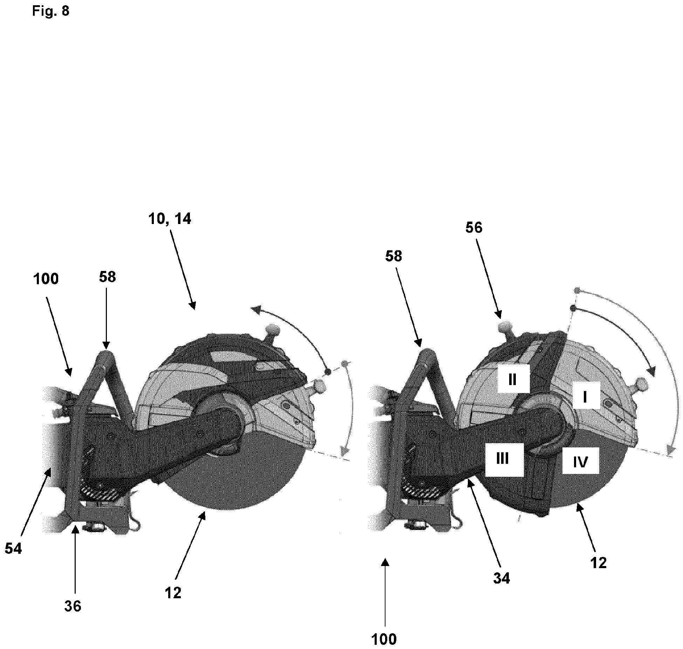

Der Begriff "Schutzhaube" wird im Kontext der vorliegenden Erfindung als Oberbegriff für die Vorrichtung verwendet, mit der das scheibenförmige Werkzeug der Werkzeugmaschine bzw. der Nutzer der Werkzeugmaschine geschützt werden sollen, wobei die Schutzfunktion insbesondere von dem bevorzugt beweglich ausgebildeten Schutzhaubenelement gewährleistet wird. Vorzugsweise werden auch die Lagerelemente, Gleitelemente und drehbaren Elemente, mit denen die Schutzhaube zusammenwirkt, um an der Werkzeugmaschine befestigt zu werden, als Bestandteile der Schutzhaube bezeichnet. Es ist im Sinne der Erfindung bevorzugt, dass die Schutzhaube an der Werkzeugmaschine befestigt werden kann, um den Nutzer vor Verletzungen durch das scheibenförmige Werkzeug der Werkzeugmaschine zu schützen, dies insbesondere im Falle eines Kickback-Ereignisses. Es ist im Sinne der Erfindung bevorzugt, dass eine Position der Schutzhaube einerseits durch einen Nutzer eingestellt werden kann. Dazu kann die Schutzhaube einen Griff umfassen, der auf einer Ober- bzw. Außenseite der Schutzhaube angeordnet vorliegt. Beispielsweise kann eine Anpassung der Schutzhaube an eine Arbeitsposition gegen den Widerstand des Reiblagers erfolgen, wobei das Reiblager vorzugsweise ein erstes Drehlager der Schutzhaube bildet. Diese bevorzugt reibgelagerte Drehbewegung in eine Raumrichtung "nach hinten" wird in der linken Bildhälfte von Figur 8 durch den nach hinten weisenden oberen Pfeil verdeutlicht. Die Bewegung der Schutzhaube bzw. des Schutzhaubenelements von der Ausgangsposition in die Arbeitsposition erfolgt insbesondere entgegen dem Uhrzeigersinn.

Die unterschiedlichen Farben bzw. Schraffuren in Figur 8 zeigen die unterschiedlichen Stellungen bzw. Positionen, die die Schutzhaube bzw. ihr Schutzhaubenelement einnehmen kann. Das Schutzhaubenelement kann beispielsweise so ausgestaltet sein, dass das Schutzhaubenelement dazu in der Lage ist, circa eine halbe Trennscheibe bzw. circa das halbe Werkzeug der Werkzeugmaschine abzudecken. Mit anderen Worten kann das Schutzhaubenelement einen Winkelbereich von 180 Grad abdecken, wenn die gesamte Trennscheibe bzw. das gesamte Werkzeug einen Vollkreis von 360 Grad bildet. Die unterschiedlichen Positionen, die das Schutzhaubenelement einnehmen kann, können in Figur 8 vorzugsweise auch an dem Griff abgelesen werden. In der linken Bildhälfte von Figur 8 symbolisiert der untere Griff eine erste Position der Schutzhaube, die im Sinne der Erfindung bevorzugt auch als Ausgangslage der Schutzhaube bezeichnet wird. Durch ein Zurückziehen der Schutzhaube bzw. des Schutzhaubenelements am Griff der Schutzhaube kann die Schutzhaube in eine Arbeitsposition gebracht werden, wobei diese Bewegung von der Ausgangsposition in die Arbeitsposition im Sinne der Erfindung als erste Drehbewegung der Schutzhaube bezeichnet wird. Diese erste Drehbewegung erfolgt vorzugsweise gegen den Widerstand des Reiblagers der Schutzhaube, die durch den oberen, nach hinten weisenden Pfeil in der linken Bildhälfte von Figur 8 symbolisiert wird. Es ist im Sinne der Erfindung ganz besonders bevorzugt, dass diese erste Drehbewegung gegen den Uhrzeigersinn erfolgt. Die Formulierungen "nach hinten" oder "nach vorne" sind für die Fachmann keine unklaren Begriffe. Im Kontext der vorliegenden Erfindung wird der vordere Bereich der Werkzeugmaschine durch den Anbringungsort des Werkzeugs der Werkzeugmaschine definiert, während ein hinterer Bereich von dem Hauptkörper festgelegt wird. Wenn die Werkzeugmaschine ein Trennschleifer ist, liegt im vorderen Bereich die Trennscheibe des Trennschleifers vor, während im hinteren Bereich der Hauptkörper des Trennschleifers vorliegt, der beispielsweise einen Motor, eine Steuerelektronik und/oder Batterien oder Akkumulatoren ("Akkus") umfassen kann.

Beim Eintauchen des Werkzeugs der Werkzeugmaschine in den zu bearbeitenden Untergrund kann sich eine Vorderkante der Schutzhaube an dem Untergrund abstützen. Dieses Eintauchen des Werkzeugs wird im Kontext der vorliegenden Erfindung bevorzugt auch als "Anschneiden" bezeichnet. Es ist im Sinne der Erfindung bevorzugt, dass dabei der angefederte Schwenkbereich des Gleitlagers, das vorzugsweise das zweite Drehlager der Schutzhaube bildet, zurückgeschoben wird, wobei dadurch das Federelement der Schutzhaube gespannt wird. Bei Auftreten eines Kickback-Ereignisses kann die Werkzeugmaschine aus dem zu bearbeitenden Untergrund geschleudert werden. Dabei kann sich das Federelement vorteilhafterweise entspannen, so dass die Schutzhaube bzw. das Schutzhaubenelement impuls- bzw. schlagartig in eine Ausgangslage gedrückt wird.

Diese bevorzugt schlagartige Bewegung der Schutzhaube in ihre Ausgangslage wird vorzugsweise dadurch ausgelöst, dass die Schutzhaube von dem zu bearbeitenden Untergrund abhebt, d.h. den Kontakt zu dem zu bearbeitenden Untergrund verliert. Sobald die Schutzhaube keinen Kontakt zum Untergrund mehr hat, wird der freigegebene Raum bzw. der Abstand von der Schutzhaube durch die zuvor aufgebaute Federkraft wieder rückgestellt. Ein wesentlicher Vorteil der Erfindung besteht darin, dass die vorgeschlagene Schutzhaube ohne Kontakt- oder Berührungssensor auskommt, der einen Kontakt zwischen Untergrund und Schutzhaube feststellen kann. Darüber hinaus ist bei der vorgeschlagenen Schutzhaube kein zusätzlicher Entriegelungsmechanismus erforderlich.

Diese Bewegung wird vorzugsweise als zweite Drehbewegung der Schutzhaube bezeichnet. Sie wird in Figur 8 durch die nach vorne weisenden Pfeile symbolisiert, die insbesondere in Richtung des Uhrzeigersinns weisen. Die Schutzhaube bzw. ihr Schutzhaubenelement werden durch die Spannkraft des gelösten Federelements in eine Raumrichtung nach vorne geschleudert, so dass das Werkzeug der Werkzeugmaschine in einem großen Winkelbereich abgedeckt wird. Diese ruckartige Bewegung der Schutzhaube bzw. des Schutzhaubenelements erfolgt insbesondere in Richtung des Uhrzeigersinns. Wenn das Werkzeug der Werkzeugmaschine eine Trennscheibe ist, kann durch die schlagartige Vorwärtsbewegung der Schutzhaube ein großer Winkelbereich der Trennscheibe abgedeckt werden, so dass der Nutzer sicher vor einer Verletzung durch die Trennscheibe geschützt ist. Diese Schutzposition wird in der rechten Bildhälfte von Figur 8 dargestellt, wobei die Schutzposition der Schutzhaube durch den in der rechten Teilfigur von Figur 8 vorne rechts dargestellten Griff symbolisiert wird. Die Schutzposition entspricht vorzugsweise auch der Ausgangsposition der Schutzhaube. Darüber hinaus kann die Schutzhaube eine Arbeitsposition einnehmen, wobei die Arbeitsposition insbesondere bei Betrieb der Werkzeugmaschine eingenommen wird, d.h. vorzugsweise dann, wenn mit der Werkzeugmaschine gearbeitet wird. Da die Schutzhaube vorzugsweise dazu eingerichtet ist, in etwa einen Winkelbereich von 180 Grad des Werkzeugs der Werkzeugmaschine abzudecken, wird der Bereich des Werkzeugs unterhalb des Werkzeug- oder Schneidarms freigegeben. Dadurch ist der Nutzer der Werkzeugmaschine aber nicht weniger gut vor Verletzungen geschützt, da dieser Bereich des Werkzeugs der Werkzeugmaschine durch den Korpus der Werkzeugmaschine abgedeckt wird, so dass der Nutzer hier keine Verletzungen befürchten muss. Der Korpus der Werkzeugmaschine kann im Kontext der vorliegenden Erfindung bevorzugt auch als Hauptkörper bezeichnet werden. Bei der Erfindung kommt vorteilhafterweise eine Schutzhaube zum Einsatz, die sich durch zwei überlagerte Bewegungen gegenüber der Werkzeugmaschine in seiner Position verändern kann.

Dabei kann der Dreh- oder Rotationspunkt der Schutzhaube bei der ersten und der zweiten Drehbewegung vorteilhafterweise der gleiche sein. Mit anderen Worten können beide Drehbewegungen um die gleiche Achse herum erfolgen. Es kann im Sinne der Erfindung allerdings auch bevorzugt sein, dass ein weiterer Dreh- oder Rotationspunkt für die Drehbewegungen über eine Mechanik gebildet wird. Dadurch kann insbesondere ein Bahnverlauf der Schutzhaube während der Bewegung im Bereich der Anfederung erzeugt werden.

Eine gewollte Positionsverstellung durch den Nutzer der Werkzeugmaschine kann durch Verdrehen der Schutzhaube bzw. ihres Schutzhaubenelements um den Dreh- oder Rotationspunkt durchgeführt werden. Dies kann beispielsweise dadurch geschehen, dass die Schutzhaube in unterschiedlichen Positionen einrastet. Die Positionsverstellung kann aber auch durch eine Überwindung einer Reibung erfolgen. Damit ist vorzugsweise eine Überwindung des Widerstands des Reiblagers gemeint. Es kann im Sinne der Erfindung auch bevorzugt sein, dass die Positionsverstellung im Wesentlichen stufenlos erfolgt. Es ist im Sinne der Erfindung bevorzugt, dass das Schutzhaubenelement und das drehbare Element ein erstes Reibpaar mit einer ersten Reibung bilden und das drehbare Element und das Lagerelement ein zweites Reibpaar mit einer zweiten Reibung, wobei die erste Reibung kleiner ist als die zweite Reibung. Mit anderen Worten stellen das Schutzhaubenelement und das drehbare Element die Reibpartner des ersten Reibpaares dar, während das drehbare Element und das Lagerelement die Reibpartner des zweiten Reibpaares darstellen. Durch die Wahl der Reibpartner der beiden Reibungspaare können die erste und die zweite Reibung eingestellt werden. Insbesondere kann ein Verhältnis zwischen den Reibungen durch die Auswahl der beteiligten Reibpartner eingestellt werden. Es ist im Sinne der Erfindung ganz besonders bevorzugt, dass die erste Reibung deutlich kleiner ist als die zweite Reibung. Dies kann beispielsweise dadurch erreicht werden, dass die erste Reibung sehr klein gewählt wird, beispielsweise in einem Bereich von "null", also im Wesentlichen keine Reibung.

Die Auswahl der Reibpartner erfolgt vorzugsweise dadurch, dass geeignete Materialien ausgewählt werden, die dann zur Herstellung und/oder Beschichtung der Reibpartner verwendet werden. Insbesondere können durch die Auswahl der Reibpartner die Funktionsfälle der Schutzhaube, die im Kontext der vorliegenden Erfindung als "Haubenverstellung" und als "gefederte Schutzfunktion" bezeichnet werden, realisiert werden. Die Haubenverstellung stellt vorzugsweise die erste Drehbewegung der Schutzhaube dar, mit der die Schutzhaube bzw. ihr Schutzhaubenelement nach hinten, d.h. gegen den Uhrzeigersinn, gezogen werden kann. Dabei wird die Schutzhaube vorzugsweise von der Ausgangs- oder Ruheposition in die Arbeitsposition bewegt. Um die Schutzhaube in Richtung des Hauptkörpers der Werkzeugmaschine zu bewegen, ist es im Sinne der Erfindung bevorzugt, das Federelement bevorzugt temporär zu spannen. Nach dem Positioniervorgang kann das Federelement wieder entspannt werden. Anschließend kann mit der Werkzeugmaschine bzw. mit der Schutzhaube gearbeitet werden. Die Formulierungen "im Uhrzeigersinn" und "gegen den Uhrzeigersinn" beziehen sich insbesondere auf die Darstellung der Erfindung in Figur 8. Allgemein formuliert entspricht eine Bewegung in Richtung "gegen den Uhrzeigersinn" einer Bewegung in Richtung des Hauptkörpers der Werkzeugmaschine oder einer Bewegung in Richtung eines Nutzers der Werkzeugmaschine, während eine Bewegung "im Uhrzeigersinn" einer Bewegung in Richtung "vom Nutzer weg" oder einer Bewegung in Richtung des zu bearbeitenden Untergrunds entspricht. Eine Bewegung in Richtung des Hauptkörpers der Werkzeugmaschine oder in Richtung eines Nutzers der Werkzeugmaschine stellt im Sinne der Erfindung bevorzugt eine Bewegung in eine Raumrichtung "nach hinten" dar, während eine Bewegung in Richtung "vom Nutzer weg" oder einer Bewegung in Richtung des zu bearbeitenden Untergrunds im Sinne der Erfindung bevorzugt eine Bewegung in eine Raumrichtung "nach vorne" darstellt.

Der Begriff "gefederte Schutzfunktion" bezeichnet vorzugsweise die Fähigkeit der Schutzhaube, sich von der Arbeitsposition in die Schutzposition zu drehen. Diese Bewegung der Schutzhaube von der Arbeitsposition in die Schutzposition erfolgt vorzugsweise schlagartig und im Uhrzeigersinn, wenn das Federelement gelöst wird und die Schutzhaube bzw. ihr Schutzhaubenelement durch die freiwerdende Federkraft in eine Raumrichtung "nach vorne" geschleudert wird. Durch diese bevorzugt als zweite Drehbewegung der Schutzhaube bezeichnete Bewegung kann der obere Bereich des Werkzeugs der Werkzeugmaschine besonders schnell abgedeckt werden, so dass der Nutzer der Werkzeugmaschine innerhalb kürzester Zeit besonders wirksam vor etwaigen Verletzungen geschützt wird.

Es ist im Sinne der Erfindung bevorzugt, dass eine Position des Schutzhaubenelements durch eine Relativbewegung zwischen dem Schutzhaubenelement und dem drehbaren Element und/oder durch eine Relativbewegung zwischen dem drehbaren Element und dem Lagerelement einstellbar ist.

Der Erfindung betrifft somit insbesondere eine Schutzhaube für eine Werkzeugmaschine, wobei die Werkzeugmaschine ein drehbares, scheibenförmiges Werkzeug aufweist, wobei eine Anbindung der Schutzhaube an die Werkzeugmaschine derart ausgestaltet ist, dass die Anbindung zwei relative Drehbewegungen der Schutzhaube zulässt. Es hat sich herausgestellt, dass die Schutzhaube durch diese unterschiedlichen Verdrehbewegungen insbesondere im Fehler- oder Kickback-Fall der Werkzeugmaschine dazu eingerichtet ist, einen möglichst großen Bereich des scheibenförmigen Werkzeugs abzudecken und den Anwender so besonders wirksam vor einem ungewollten Kontakt mit dem rotierenden Werkzeug zu schützen.

Die vorgeschlagene Schutzhaube ist in dem Sinne einteilig ausgebildet, dass sie lediglich ein Schutzhaubenelement aufweist und nicht - wie viele andere Schutzhauben, die aus dem Stand der Technik bekannt sind - mehrere Schutzhaubenelemente, von denen eine Teilmenge fest an der Werkzeugmaschine verbaut ist, während eine andere Teilmenge der Schutzhaubenelemente in Bezug auf diese festen Schutzhaubenelemente beweglich ausgebildet sind. Die beweglichen Schutzhaubenelemente der konventionellen Schutzhauben, wie sie aus dem Stand der Technik bekannt sind, können beispielsweise fächerartig ausgestaltet sein oder die beweglichen Schutzelemente können in einen Innenraum der festen Schutzhaubenelement hineingeschoben werden. Solche mehrteiligen Schutzhauben sind beispielsweise aus der DE 10 2004 035 876 B3 und EP 3 208 038 B1 bekannt.

Von einer solchen mehrteiligen, möglicherweise fächerartigen Konstruktion wendet sich die vorliegende Erfindung durch die bevorzugt einteilige Ausbildung des Schutzhaubenelements der Schutzhaube gerade ab. Dadurch kann eine besonders stabile Schutzhaube erhalten werden, die darüber hinaus mit dem weiteren Vorteil verbunden ist, dass zu allen Zeiten des Betriebs der Werkzeugmaschine ein besonders großer Bereich des Werkzeugs sicher abgedeckt und der Nutzer der Werkzeugmaschine wirksam vor Verletzungen, vor allem im Kickback-Fall, geschützt werden kann. Das eine Schutzhaubenelement ist vorzugsweise einteilig ausgebildet. Ein weiterer Vorteil der Erfindung besteht darin, dass die Schutzhaube vom Anwender einerseits in eine gewollte, voreingestellte Betriebs- oder Arbeitsposition bewegt werden kann, wobei die Schutzhaube andererseits im Fehler- oder Kickback-Fall die gewünschte Schutzfunktion ausführen kann. Diese Schutzfunktion wird durch das schlagartige Vorschnellen der Schutzhaube ermöglicht, wenn durch das Kickback-Ereignis das Federelement gelöst wird, so dass die Schutzhaube bzw. ihr Schutzhaubenelement durch die freiwerdende Federenergie in eine Raumrichtung nach vorne geschleudert wird. Am Ende dieser zweiten Drehbewegung der Schutzhaube nimmt die Schutzhaube vorzugsweise die Schutzposition ein, die bevorzugt auch der Ausgangslage der Schutzhaube entspricht. Auf diese Weise gewährleistet die vorgeschlagene Schutzhaube einerseits einen optimalen permanenten Schutz während der Arbeit mit der Werkzeugmaschine und andererseits einen optimalen Schutz im Fehler- oder Kickback-Fall.

Tests haben gezeigt, dass die Bedienung der Schutzhaube für den Nutzer durch die bevorzugt einteilige Ausgestaltung des Schutzhaubenelements im Vergleich zu aufwändigen, komplizierten mehrteiligen Schutzhauben deutlicher vereinfacht werden kann. Insbesondere gestaltet sich die Arbeit für den Nutzer sehr übersichtlich, weil er nur ein Bauteil der Schutzhaube bedienen und so im Auge behalten muss, um die Schutzhaube optimal für seine Schnittführung einzustellen. Dazu kann der Nutzer die Schutzhaube in gewohnter Art und Weise angreifen und verstellen.

Dazu weist die Schutzhaube an ihrer Ober- bzw. Außenseite einen bevorzugt knaufähnlichen Griff auf. Vorteilhafterweise ist es bei der vorgeschlagenen Schutzhaube für den Nutzer nicht erforderlich, mangels Vorhandenseins auf weitere Komponenten oder Zusatzelement der Schutzhaube zu achten. Dadurch kann sich der Nutzer auf die Durchführung der Schneide- oder Trennarbeit, d.h. auf die Arbeit mit der Werkzeugmaschine, konzentrieren und wird nicht durch etwaige Sicherheitsüberlegungen abgelenkt. Auf diese Weise kann die grundsätzliche Arbeitssicherheit mit der vorgeschlagenen Werkzeugmaschine erheblich erhöht werden.

Es ist im Sinne der Erfindung bevorzugt, dass eine Drehachse der Schutzhaube mit einer Drehachse des Werkzeugs zusammenfällt. Alternativ dazu kann es im Sinne der Erfindung bevorzugt sein, dass die Drehachse der Schutzhaube im Wesentlichen parallel zu einer Drehachse des Werkzeugs verläuft. Es kann im Sinne der Erfindung auch bevorzugt sein, dass ein Drehpunkt der Schutzhaube nicht mit einem Drehpunkt des Werkzeugs zusammenfällt. Der Drehpunkt, durch den vorzugsweise die Drehachse der Schutzhaube in dieser Ausführungsform der Erfindung verläuft, wird im Kontext der Erfindung bevorzugt als weiterer Drehpunkt bezeichnet. Dieser weitere Drehpunkt kann über eine eigens dafür konstruierte Mechanik gebildet werden. Wenn diese Mechanik mehr als einen von dem Drehpunkt des Werkzeugs abweichenden Drehpunkt der Schutzhaube ermöglicht, ergibt sich vorteilhafterweise ein Bahnverlauf dieser weiteren Drehpunkte.

Es ist im Sinne der Erfindung bevorzugt, dass die Schutzhaube ein Gleitelement aufweist, wobei das Gleitelement zwischen dem Schutzhaubenelement und dem drehbaren Element angeordnet vorliegt. Im montierten, d.h. im zusammengebauten Zustand kann die Schutzhaube von außen nach innen wie folgt beschrieben werden. Der äußere Bereich der Schutzhaube wird von dem Schutzhaubenelement gebildet, wobei in einer Nut des Schutzhaubenelement Platz für mindestens eine Federelement vorgesehen ist. Die offene Seite der Nut des Schutzhaubenelements wird von dem drehbaren Element zur Positionierung der Schutzhaube ("Haubenpositionierung") verschlossen, wobei dieses drehbare Element mit dem Schutzhaubenelement ein erstes Reibpaar bilden kann. Das Schutzhaubenelement und das drehbare Element bilden die Reibpartner dieses ersten Reibpaares, wobei sowohl das Schutzhaubenelement, als auch das drehbare Element mindestens einen Reib- oder Kontaktbereich aufweisen, in denen die Reibung mit dem jeweils anderen Reibpartner erfolgt. Es ist im Sinne der Erfindung bevorzugt, dass in diesen Reibbereichen der Reibpartner des ersten Reibpaares eine Materialkonstellation vorliegt, die durch die erste Reibung bzw. den ersten Reibkoeffizienten beschrieben werden kann.

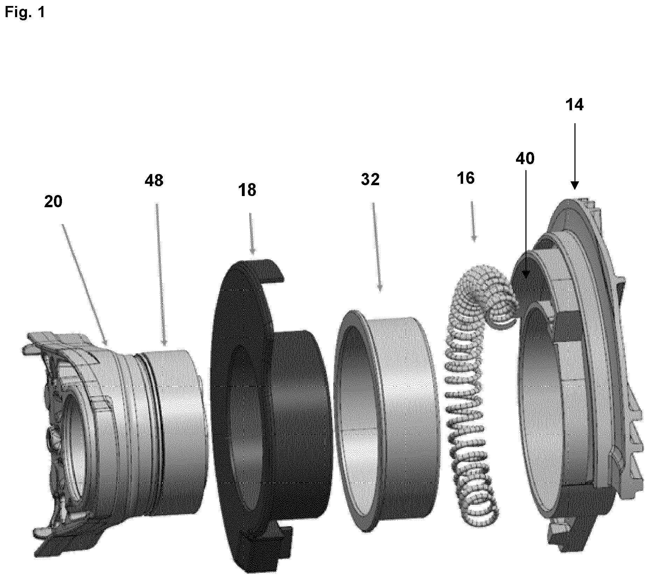

Ein zweites Reibpaar kann von dem drehbaren Element und dem Lagerelement der Schutzhaube gebildet werden, wobei das Lagerelement das innerste Element der Schutzhaube bildet und eine Drehachse für das drehbare Element umfasst. Das Lagerelement ist vorzugsweise im Wesentlichen zylinderförmig ausgebildet, wobei mittig durch den bevorzugt hohlen Innenraum des Lagerelements eine virtuelle Zentralachse verläuft, die die Drehachse des drehbaren Elements bilden kann. Das drehbare Element und das Lagerelement bilden die Reibpartner dieses zweiten Reibpaares, wobei sowohl das drehbare Element, als auch das Lagerelement mindestens einen Reib- oder Kontaktbereich aufweisen, in denen die Reibung mit dem jeweils anderen Reibpartner erfolgt. Es ist im Sinne der Erfindung bevorzugt, dass in diesen Reibbereichen der Reibpartner des zweiten Reibpaares eine Materialkonstellation vorliegt, die durch die zweite Reibung bzw. den zweiten Reibkoeffizienten beschrieben werden kann. Der Reib- oder Kontaktbereich des Lagerelements kann von einem zweiten Gleitelement gebildet werden. Es ist im Sinne der Erfindung bevorzugt, dass das Lagerelement ein zweites Gleitelement aufweist, wobei das zweite Gleitelement in eine Öffnung des drehbaren Elements einführbar ist. Dadurch kann vorteilhafterweise der Kontakt zwischen dem Lagerelement und dem drehbaren Element hergestellt werden. Es ist im Sinne der Erfindung bevorzugt, dass das Lagerelement im Bereich des zweiten Gleitelements hohlzylinderförmig ausgebildet ist, wobei ein Außendurchmesser des zweiten Gleitelements des Lagerelements vorzugsweise kleiner ist als in Innendurchmesser der Öffnung des drehbaren Elements, in die das zweite Gleitelement eingeführt werden kann. Die Öffnung des drehbaren Elements ist vorzugsweise groß genug, um das Lagerelement bzw. sein zweites Gleitelement aufzunehmen. Während das erste Gleitelement ein separates Bauteil der vorgeschlagenen Schutzhaube ist, ist das zweite Gleitelement vorzugsweise Bestandteil des Lagerelements der Schutzhaube. Dies geht insbesondere aus Fig. 1 hervor. Auch das drehbare Element weist vorzugsweise einen Bereich auf, der hohlzylinderförmig ausgebildet ist. Dieser Bereich des drehbaren Elements kann vorzugsweise in das erste Gleitelement eingeführt werden. Das bedeutet im Sinne der Erfindung bevorzugt, dass ein Außendurchmesser des bevorzugt hohlzylinderförmig ausgebildeten Bereichs des drehbaren Elements kleiner ist als ein Innendurchmesser einer Öffnung des ersten Gleitelements, das vorzugsweise auch hohlzylinderförmig ausgebildet ist. Die Öffnung des ersten Gleitelements ist vorzugsweise groß genug, um das drehbare Element bzw. seinen hohlzylinderförmig ausgebildeten Teilbereich aufzunehmen.

Um die Positionsverstellung durchzuführen, wird zunächst in einem ersten Schritt ein Verstellweg des Schutzmechanismus überwunden und anschließend in einem zweiten Schritt die gewünschte Verstellung der Position vorgenommen. Dieser Vorgang wird im Sinne der Erfindung bevorzugt als erste Drehbewegung der Schutzhaube bezeichnet. Durch die bevorzugt überlagerte Bewegung zum Schutz vor Verletzungen bei Kickback-Ereignissen wird die Schutzhaube um einen Dreh- oder Rotationspunkt verdreht. Beim Arbeiten mit der Werkzeugmaschine und dem dabei auftretenden Kontakt mit einem zu bearbeitenden Untergrund kann ein Öffnen des Sicherheitsbereichs herbeigeführt werden, indem eine ausreichend große Gegenkraft aufgebracht wird.

Das Gleitelement ist vorzugsweise holzylinderförmig ausgebildet. Das Gleitelement kann einen Ring bilden, der zwischen das Schutzhaubenelement und das drehbare Element geschoben werden kann. Durch die beiden Reibpaare der Schutzhaube können zwei sich vorzugsweise überlagernde Relativbewegungen der jeweils beteiligen Reibpartner gewährleistet werden, wobei diese sich überlagernden Bewegungen vorteilhafterweise eine Veränderung bzw. Einstellbarkeit der Position der Schutzhaube bzw. des Schutzhaubenelements gegenüber der Werkzeugmaschine ermöglichen. Dabei kann der Drehpunkt der Bewegung der Schutzhaube bzw. des Schutzhaubenelements - wie weiter oben ausgeführt - mit dem Drehpunkt des scheibenförmigen Werkzeugs der Werkzeugmaschine zusammenfallen oder nicht.

Vorzugsweise kann eine Verbindung zwischen der Schutzhaube und dem mindestens einen Federelement zwischen der Schutzhaube auf der einen und einer Achse des Werkszeugs, einem Werkzeugarm und/oder einem Schutzrahmen auf der anderen Seite gebildet werden. Das mindestens eine bevorzugt rückstellende Federelement ist vorzugsweise so angeordnet, dass daraus eine Relativbewegung zwischen der Schutzhaube und dem drehbaren Element zur Positionierung der Schutzhaube resultiert. Diese Relativbewegung kann je nach Ausgestaltung des Federelements direkt zwischen den Bauteilen, d.h. der Schutzhaube und dem drehbaren Element zur Positionierung der Schutzhaube, erfolgen oder indirekt über andere, vorzugsweise feststehende Gerätebauteile, wie zum Beispiel einem Hauptkörper oder einem Gehäuse der Werkzeugmaschine.

Es ist im Sinne der Erfindung bevorzugt, dass die Schutzhaube durch die erste Drehbewegung den Widerstand eines Reiblager bewegt wird, um sie in der Position zu verstellen. Zusätzlich kann das Federelement der Schutzhaube durch eine Bewegung nach hinten, d.h. in Richtung des Nutzers der Werkzeugmaschine, gespannt werden. Das Spannen des Federelements kann vorzugsweise durch eine Bewegung nach hinten - beispielsweise vorgenommen durch den Nutzer der Werkzeugmaschine - oder durch Anlage der Werkzeugmaschine oder ihrer Schutzhaube an einen Untergrund erfolgen.
dass die Spannenergie des Federelements bei Auftreten eines Kickback-Ereignisses wieder frei wird. Durch die Entspannung bzw. das Lösen des Federelements wird die Schutzhaube in Uhrzeigersinn nach vorne geschleudert ("zweite Drehbewegung der Schutzhaube"), so dass die Bereiche des Werkzeugs der Werkzeugmaschine schnell abgedeckt werden können, die zu Verletzungen des Nutzers der Werkzeugmaschine führen können. Auf diese Weise wird der Anwender der Werkzeugmaschine wirksam geschützt. Wenn die Werkzeugmaschine als Trennschleifer ausgebildet ist, kann durch die zweite Drehbewegung der Schutzhaube insbesondere der obere Bereich der Trennscheibe abgedeckt werden, der dem Nutzer bei der Arbeit mit dem Trennschleifer zugewandt ist. Durch die bevorzugt schlagartige Abdeckung der Trennscheibe kann der Nutzer wirksam vor Verletzungen im Kickback-Fall geschützt werden.

Es ist im Sinne der Erfindung bevorzugt, dass das Federelement ein passives Federelement ist. Das Federelement kann beispielsweise ausgewählt sein aus einer Gruppe umfassend Blattfedern, Elastomerkörper, Schenkelfedern, Zug- oder Druckfedern, die vorzugsweise zylindrisch ausgebildet sein können, Bogenfedern und/oder Gasdruckfedern oder dergleichen, ohne darauf beschränkt zu sein. Es kann im Sinne der Erfindung auch bevorzugt sein, dass das Federelement aktive Rückstellelemente umfasst. Diese aktiven Rückstellelemente können beispielsweise pneumatische Zylinder, Sprengsätze und/oder Aktuatoren sein, wobei die Aktuatoren vorzugsweise elektrisch betrieben werden können.

Es ist im Sinne der Erfindung bevorzugt, dass ein für den Nutzer der Werkzeugmaschine gefährlicher Bereich des Werkzeugs der Werkzeugmaschine zwischen der Schutzhaube und der Werkzeugmaschine angeordnet vorliegt, wobei dieser gefährliche Bereich des Werkzeugs durch die Schutzhaube zu allen Betriebszeiten der Werkzeugmaschine abgedeckt ist.

Vorzugsweise kann das Schutzhaubenelement eine Nut zur Aufnahme des mindestens einen Federelements umfassen.

Es ist im Sinne der Erfindung bevorzugt, dass die Schutzhaube gegenüber dem drehbaren Element zur Positionierung der Schutzhaube über zwei Anschläge verfügt. Vorzugsweise ist ein erster Anschlag dazu eingerichtet, einen Weg der Schutzhaube zu begrenzen, den die Schutzhaube im Grund- oder Ruhezustand in eine Vorwärtsrichtung, d.h. im Uhrzeigersinn, zurücklegen kann. Dieser Weg entspricht vorzugsweise auch dem Weg, den die Schutzhaube im Falle, dass ein Kickback-Ereignis auftritt, zurücklegt. Vorzugsweise definiert der erste Anschlag den Endanschlag der Schutzhaube bei einer Bewegung im Uhrzeigersinn, d.h. bei einer Vorwärtsbewegung.

Der zweite Anschlag der Schutzhaube ist vorzugsweise dazu eingerichtet, eine Mitnahme der Haubenverstellung zu bilden; dies insbesondere dann, wenn die Schutzhaube zurückgezogen wird, d.h. eine Bewegung in einer Rückwärtsrichtung ausführt. Dazu wird zunächst - bevorzugt in einem ersten Schritt - die Federkraft des Federelements überwunden, so dass sich die Schutzhaube in ihrem Schutzbereich bewegt. Der Begriff "Schutzbereich" wird im Kontext der vorliegenden Erfindung als der Bereich der Schutzhaube verstanden, der beispielsweise in der rechten Bildhälfte von Figur 8 den vorderen, oberen Bereich der Schutzhaube bzw. des Werkzeugs der Werkzeugmaschine bildet. Wenn man sich die Schutzhaube bzw. das Werkzeug der Werkzeugmaschine als Zifferblatt einer analogen Uhr vorstellt, entspricht dieser Schutzbereich in etwa dem Bereich zwischen 12 Uhr und 3 Uhr bzw. leicht versetzt dem Bereich zwischen 12.30 und 15.30 Uhr. Wenn man gedanklich vier Quadranten über die Schutzhaube bzw. über das Werkzeug der Werkzeugmaschine legt, entspricht der Schutzbereich im Wesentlichen bzw. leicht versetzt dem ersten Quadranten. Der zweite Quadrant würde bei einer solchen Quadrantendarstellung links neben dem ersten Quadranten liegen, während der dritte und vierte Quadrant bei einer solchen Zählung gegen den Uhrzeigersinn auf der Unterseite des Werkzeugs der Werkzeugmaschine liegen. In der am weitesten zurückgezogenen Position der Schutzhaube deckt die Schutzhaube vorzugsweise den zweiten und den dritten Quadranten ab, die vorzugsweise den hinteren Bereich der Schutzhaube bzw. des Werkzeugs der Werkzeugmaschine bilden (vgl. Figur 8, rechte Bildhälfte).

Die Schutzhaube bzw. ihr Schutzhaubenelement kann einen ersten Anschlag und einen zweiten Anschlag aufweisen, wobei der erste Anschlag dazu eingerichtet ist, eine Bewegung der Schutzhaube in eine Vorwärtsrichtung zu begrenzen, und wobei der zweite Anschlag dazu eingerichtet ist, eine Bewegung der Schutzhaube in eine Rückwärtsrichtung zu begrenzen. Es ist im Sinne der Erfindung bevorzugt, dass sich die Schutzhaube zwischen diesen beiden Anschlägen bewegen kann. Es ist im Sinne der Erfindung bevorzugt, dass die Anschläge jeweils mit einer bestimmten Position oder Stellung der Schutzhaube korrespondieren. Diese Positionen oder Stellungen sind in Figur 8 dargestellt (rechte Bildhälfte). Der erste Anschlag, der die Bewegung der Schutzhaube in einer Vorwärtsrichtung begrenzen kann, ist vorzugsweise damit verbunden, dass sich die Schutzhaube in der Ausgangs- oder Schutzposition befindet, wobei diese Ausgangs- oder Schutzposition durch den nach vorne, oben ragenden Griff der Schutzhaube dargestellt wird. In dieser Ausgangs- oder Schutzposition deckt die Schutzhaube insbesondere die obere Hälfte des Werkzeugs der Werkzeugmaschine ab. Der zweite Anschlag, der die Bewegung der Schutzhaube in einer Rückwärtsrichtung begrenzen kann, ist vorzugsweise damit verbunden, dass sich die Schutzhaube in der Arbeitsposition befindet, wobei diese Arbeitsposition durch den nach hinten, oben ragenden Griff der Schutzhaube dargestellt wird. In dieser Arbeitsposition deckt die Schutzhaube insbesondere die hintere Hälfte des Werkzeugs der Werkzeugmaschine ab, wobei die hintere Hälfte des Werkzeugs insbesondere dem Nutzer bzw. der Werkzeugmaschine zugewandt ist (vgl. rechte Bildhälfte der Figur 8). Es ist im Sinne der Erfindung bevorzugt, den ersten und den zweiten Anschlag der Schutzhaube als "innere Anschläge" zu bezeichnen. Vorzugsweise kann sich die Schutzhaube zwischen diesen inneren Anschlägen federbelastet bewegen. Es ist im Sinne der Erfindung bevorzugt, dass eine Bewegung der Schutzhaube zwischen diesen inneren Anschlägen um das zweite Drehlager herum erfolgt, wobei das zweite Drehlager der Schutzhaube vorzugsweise als Gleitlager ausgebildet ist.

Es ist im Sinne der Erfindung bevorzugt, dass die Schutzhaube gegen das erste Drehlager weiter gedreht werden kann, wenn einer der inneren Anschläge erreicht ist. Dadurch kann die Schutzhaube vorteilhafterweise an die Arbeitsposition der Werkzeugmaschine angepasst werden. Es ist im Sinne der Erfindung bevorzugt, dass die Schutzhaube zu keiner Zeit arretiert wird, wobei sich die Schutzhaube vorteilhafterweise zwischen dem ersten und dem zweiten Anschlag der Schutzhaube frei bewegen kann. Um ihre Schutzfunktion zu erfüllen, kann sich die Schutzhaube bei Entlastung und bei einem Kickback-Fall vorzugsweise automatisch wieder in ihre Endposition zurückbewegen.

Es ist im Sinne der Erfindung bevorzugt, dass die Schutzhaube einen dritten Anschlag aufweist, der vorzugsweise als äußerer Anschlag der Schutzhaube bezeichnet wird. Dieser äußere Anschlag kann an einem Riemenkasten angeordnet vorliegen, wenn die Werkzeugmaschine einen Riemenantrieb und einen Riemenkasten umfasst. Durch den dritten oder äußeren Anschlag kann vorteilhafterweise verhindert werden, dass die Schutzhaube einen hinteren Bereich des Werkzeugs der Werkzeugmaschine freigibt, wenn sich die Schutzhaube in einer vorderen Arbeitsposition befindet (vgl. Figur 8, linke Bildhälfte).

Es ist im Sinne der Erfindung bevorzugt, dass die Schutzhaube bzw. ihr Schutzhaubenelement einen dritten Anschlag aufweist, wobei der dritte Anschlag dazu eingerichtet ist, zu verhindern, dass ein dem Nutzer der Werkzeugmaschine zugewandter Bereich des Werkzeugs der Werkzeugmaschine frei liegt. Vorteilhafterweise kann dadurch der auszufedernde Bereich der Schutzhaube eingeschränkt werden. Mit dem dritten Anschlag kann vorteilhafterweise verhindert werden, dass in der vordersten Position der Schutzhaube derjenige Bereich des Werkzeugs der Werkzeugmaschine, der dem Nutzer zugewandt ist, frei wird oder frei liegt. Es ist im Sinne der Erfindung bevorzugt, dass der dem Nutzer zugewandter Bereich des Werkzeugs der Werkzeugmaschine als hinterer Bereich des Werkzeugs der Werkzeugmaschine bezeichnet wird, während der Bereich des Werkzeugs der Werkzeugmaschine, der bei Betrieb der Werkzeugmaschine einem zu bearbeitenden Untergrund zugewandt ist, als unterer und/oder vorderer Bereich des Werkzeugs der Werkzeugmaschine bezeichnet wird. Vorzugsweise ist der hintere Bereich des Werkzeugs der Werkzeugmaschine dem Nutzer und/oder der Werkzeugmaschine zugewandt, während der vordere Bereich des Werkzeugs der Werkzeugmaschine in Arbeitsrichtung der Werkzeugmaschine deutet. Demgemäß kann am hinteren Ende der Werkzeugmaschine ein hinterer Handgriff angebracht vorliegen, während ein einer Oberseite der Werkzeugmaschine ein weiterer Handgriff angeordnet vorliegen kann, der beispielsweise als Hebegriff fungiert.

In einem zweiten Aspekt betrifft die Erfindung eine Werkzeugmaschine mit einer solchen Schutzhaube. Die für die Schutzhaube beschriebenen Definitionen, technischen Wirkungen und Vorteile gelten für die Werkzeugmaschine analog.

Weitere Vorteile ergeben sich aus der folgenden Figurenbeschreibung. In den Figuren ist ein Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigt:
- Fig. 1: Explosionsdarstellung einer möglichen Ausgestaltung der Schutzhaube
- Fig. 2: schematische Darstellung möglicher Positionen der Schutzhaube in Bezug auf die Werkzeugmaschine bzw. das Werkzeug, insbesondere Ruheposition
- Fig. 3: schematische Darstellung möglicher Positionen der Schutzhaube in Bezug auf die Werkzeugmaschine bzw. das Werkzeug, insbesondere Arbeitsposition
- Fig. 4: Seitenansicht einer möglichen Ausgestaltung der Schutzhaube mit möglichen Positionen der Anschläge
- Fig. 5: schematische Seitenansicht einer möglichen Ausgestaltung der Schutzhaube mit möglichen Positionen der Anschläge und des gefährlichen Bereichs
- Fig. 6: schematische Seitenansicht einer möglichen Ausgestaltung der Schutzhaube mit möglichen Anbindungsmöglichkeiten für das mindestens eine Federelement
- Fig. 7: Seitenansicht einer möglichen Ausgestaltung der Schutzhaube und seiner Lagerstellen
- Fig. 8: Seitenansicht einer bevorzugten Ausgestaltung der Werkzeugmaschine mit verschiedenen Positionen einer bevorzugten Ausgestaltung der Schutzhaube
- Fig. 9: Explosionsdarstellung einer möglichen Ausgestaltung der Schutzhaube in Zusammenhang mit einer bevorzugten Ausgestaltung der Werkzeugmaschine

### Ausführungsbeispiele und Figurenbeschreibung:

Fig. 1 zeigt eine Explosionsdarstellung einer möglichen Ausgestaltung der Schutzhaube 10. Insbesondere zeigt Figur 1 von links nach rechts das Lagerelement 20 mit seinem zweiten Gleitelement 48, das in das drehbare Element 18 eingeführt werden kann. Durch diese Verbindung von Lagerelement 20 und drehbarem Element 18 kann das zweite Reibpaar 52 gebildet werden, wobei der Kontakt zwischen dem Lagerelement 20 und drehbarem Element 18 durch die zweite Reibung beschrieben werden kann. Das zweite Gleitelement 48 ist in dem in Figur 1 dargestellten Ausführungsbeispiel der Erfindung ein Bestandteil des Lagerelements 20. Ein Teilbereich des drehbaren Elements 18 kann in das optionale erste Gleitelement 32 eingeführt werden. Auf der rechten Seite von Figur 1 ist ein Ausschnitt des Schutzhaubenelements 14 der Schutzhaube 10 zu sehen, das eine Nut 40 zur Aufnahme des Federelements 16 aufweist. Das Schutzhaubenelement 14 und das drehbare Element 18 bilden bevorzugt zusammen mit dem optionalen Gleitelement 32 das erste Reibpaar 50, das durch die erste Reibung beschrieben werden kann, wobei wobei die erste Reibung kleiner vorzugsweise ist als die zweite Reibung.

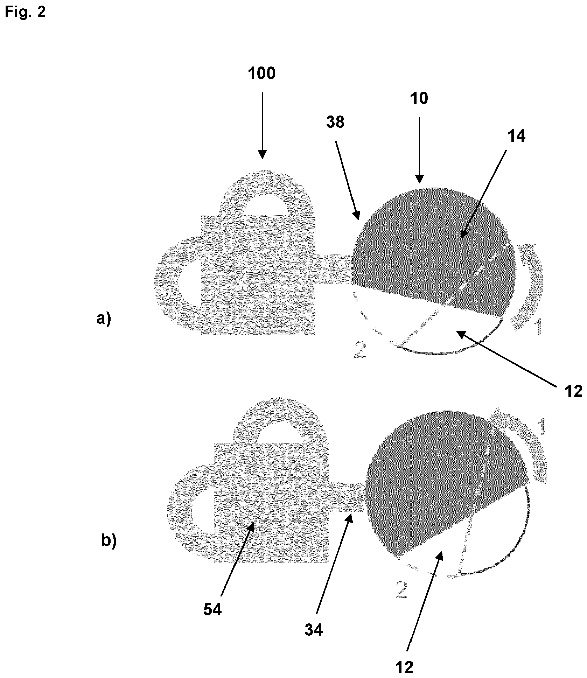

Fig. 2 zeigt eine schematische Darstellung möglicher Positionen der Schutzhaube 10 in Bezug auf die Werkzeugmaschine 100 bzw. das Werkzeug 12. Insbesondere wird in Figur 2 die Ruheposition der Schutzhaube 10 bzw. des Schutzhaubenelements 14 gezeigt.

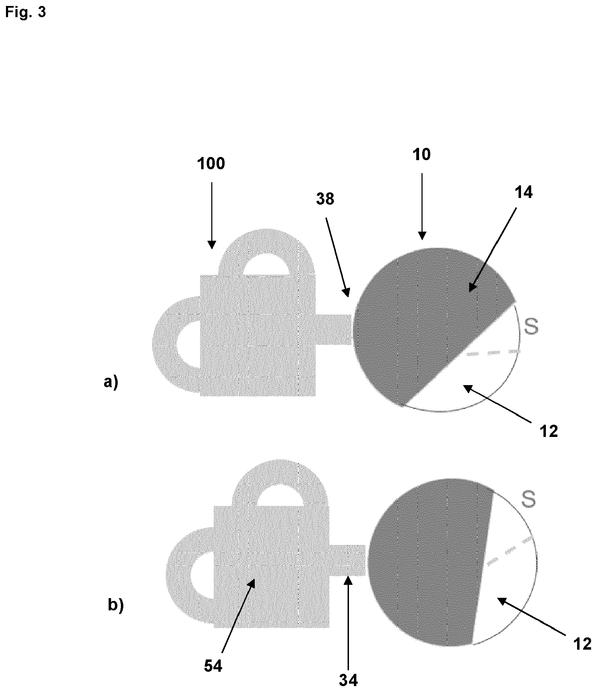

Fig. 3 zeigt eine schematische Darstellung möglicher Positionen der Schutzhaube 10 in Bezug auf die Werkzeugmaschine 100 bzw. das Werkzeug 12. Insbesondere wird in Figur 3 die Arbeitsposition der Schutzhaube 10 bzw. des Schutzhaubenelements 14 gezeigt.

Darüber hinaus sind in Figur 3 der Hauptkörper 54 der Werkzeugmaschine 100 und der Werkzeugarm 34 dargestellt, wobei an dem Werkzeugarm 34 das Werkzeug 12 der Werkzeugmaschine 10 befestigt werden kann.

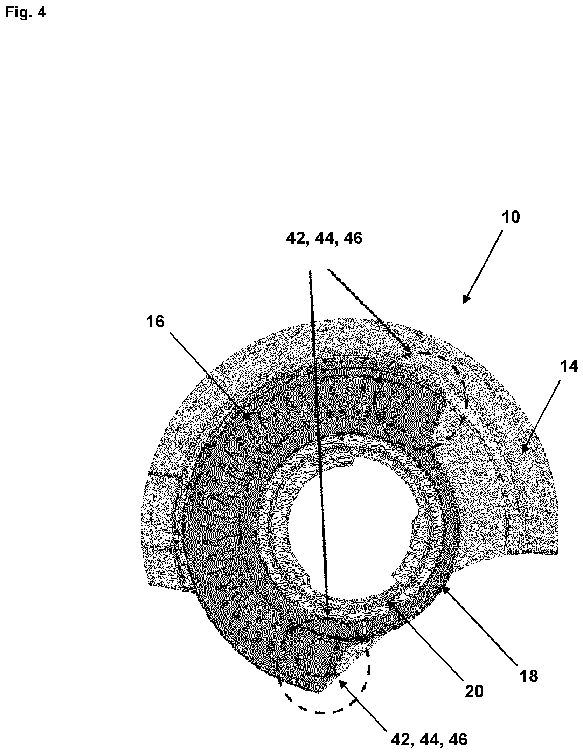

Fig. 4 zeigt eine Darstellung einer möglichen Ausgestaltung der Schutzhaube 10 mit möglichen Positionen der Anschläge 42, 44, 46.

Darüber hinaus zeigt Figur 4 die Komponenten der Schutzhaube 10, insbesondere das Schutzhaubenelement 14, das Federelement 16 und im Inneren der Schutzhaube 10 das Lagerelement 20 und das drehbare Element 18.

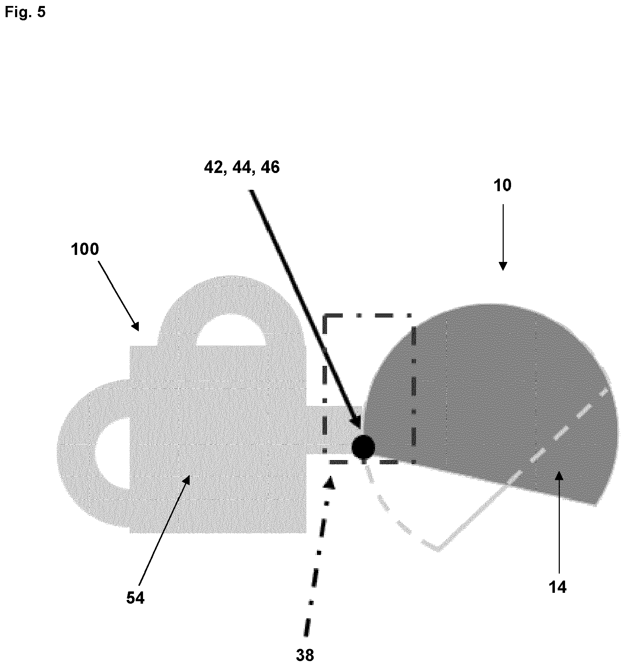

Fig. 5 zeigt eine schematische Seitenansicht einer möglichen Ausgestaltung der Schutzhaube 10 mit möglichen Positionen der Anschläge 42, 44, 46, sowie den gefährlichen Bereich 38. Der gefährliche Bereich 38 der Schutzhaube 10 ist vorzugsweise dadurch gekennzeichnet, dass der gefährliche Bereich 38 dem Nutzer und/oder der Werkzeugmaschine 100 zugewandt angeordnet bzw. orientiert ist. Ein wesentlicher Vorteil der Erfindung besteht darin, dass mit der vorgeschlagenen Schutzhaube 10 der gefährliche Bereich 38 stets abgedeckt ist, so dass der Nutzer der Werkzeugmaschine 100 besonders wirksam vor Verletzungen geschützt wird.

Fig. 6 zeigt eine schematische Seitenansicht von möglichen Ausgestaltungen der Schutzhaube 10 mit möglichen Anbindungsmöglichkeiten für das mindestens eine Federelement 16.

In Teilfigur 6a liegt das mindestens eine Federelement 16 zwischen Schutzhaubenelement 14 und den inneren Bestandteilen der Schutzhaube 10, nämlich Lagerelement 20 und drehbarem Element 18, angeordnet vor.

In Teilfigur 6b liegt das mindestens eine Federelement 16 im Bereich des Werkzeugarms 34 der Werkzeugmaschine 100 angeordnet vor. Der Werkzeugarm 34 ragt aus dem Hauptkörper der Werkzeugmaschine 100 heraus und ist dazu eingerichtet, das Werkzeug 12 der Werkzeugmaschine 100 zu tragen. Mit anderen Worten kann das Werkzeug 12 der Werkzeugmaschine 100 an dem Werkzeugarm 34 befestigt werden.

In Teilfigur 6c liegt das mindestens eine Federelement 16 im Bereich der inneren Bestandteile der Schutzhaube 10 angeordnet vor, wobei der innere Bereich der Schutzhaube 10 von dem Lagerelement 20 und dem drehbaren Element 18 gebildet wird.

In Teilfigur 6d liegt das mindestens eine Federelement 16 an einem Schutzrahmen 36 der Werkzeugmaschine 100 angeordnet vor. Die Werkzeugmaschine 100 kann einen Schutzrahmen 36 aufweisen, der beispielsweise den Hauptkörper 54 der Werkzeugmaschine 100 umgibt und Komponenten der Werkzeugmaschine 100, die im Hauptkörper 54 angeordnet sind, vor Erschütterungen schützt. Bei diesen Komponenten der Werkzeugmaschine 100 kann es sich beispielsweise um Batterien, den Motor oder elektronische Bauteile der Werkzeugmaschine 100 handeln.

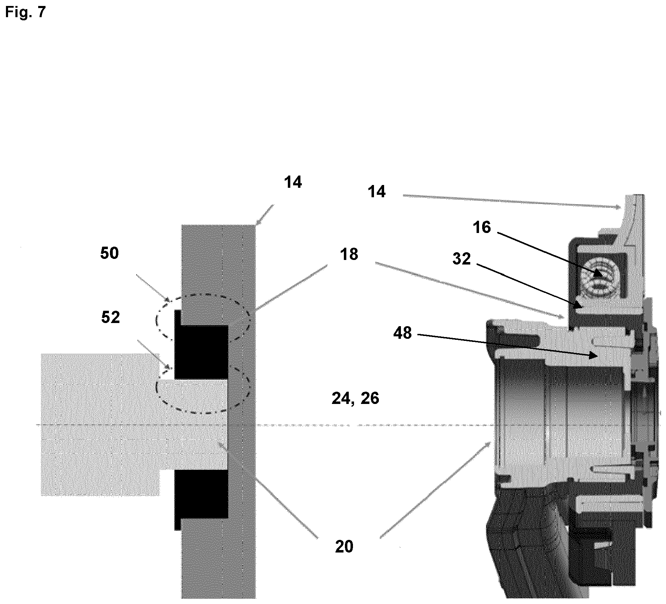

Fig. 7 zeigt eine Seitenansicht einer möglichen Ausgestaltung der Schutzhaube 10 und seiner lagerstellen. Dargestellt ist insbesondere das Schutzhaubenelement 14, in dessen Nut 40 das Federelement 16 angeordnet vorliegt. Darüber hinaus sind das erste Gleitelement 32 und das zweite Gleitelement 48 dargestellt, sowie das erste Reibpaar 50 und das zweite Reibpaar 52. Das erste Reibpaar 50 wird vorzugsweise von dem Schutzhaubenelement 14 und dem drehbaren Element 18 gebildet, während das zweite Reibpaar 52 von dem drehbaren Element 18 und dem Lagerelement 20 bzw. dem zweiten Gleitelement 48 gebildet wird, wobei das zweite Gleitelement 48 vorzugsweise Bestandteil des Lagerelements 20 sein kann. Bei dem in Fig. 7 dargestellten Ausführungsbeispiel der Erfindung fallen die Drehachse 24 der Schutzhaube 10 und die Drehachse 26 des Werkzeugs 12 der Werkzeugmaschine 100 zusammen. Das Lagerelement 20 kann vorzugsweise eine erste Lagerung der Schutzhaube 10 bilden, während das drehbare Element 18 eine zweite Lagerung für die Schutzhaube 10 bildet. Bei dem in Fig. 7 dargestellten Ausführungsbeispiel der Erfindung umfasst das drehbare Element 18 die Drehachse 24 der Schutzhaube 10, während das Lagerelement 20 die Drehachse 26 des Werkzeugs 12 der Werkzeugmaschine 100 umfasst bzw. bildet.

Figur 8 zeigt eine Ansicht einer bevorzugten Ausgestaltung der Werkzeugmaschine 100 mit verschiedenen Positionen einer bevorzugten Ausgestaltung der Schutzhaube 10. Die Werkzeugmaschine 100 weist als Werkzeug 12 eine Trennscheibe auf und ist in dem in Figur 8 dargestellten Ausführungsbeispiel als Trennschleifer ausgebildet. Die Werkzeugmaschine 100 weist einen Schutzrahmen 36 auf, der einen Hauptkörper 54 der Werkzeugmaschine 100 schützen kann. In dem Hauptkörper 54 der Werkzeugmaschine 100 können beispielsweise ein Motor oder Batterien zur Energieversorgung der Werkzeugmaschine 100 untergebracht sein (Motor und Batterien: nicht dargestellt). Der Schutzrahmen 36 kann in einen Hebegriff 58 der Werkzeugmaschine 100 übergehen, mit dem die Werkzeugmaschine 100 getragen bzw. gehalten werden kann. Darüber hinaus kann die Werkzeugmaschine 100 einen hinteren Handgriff aufweisen (nicht dargestellt). Die Schutzhaube 10 kann einen Griff 56 aufweisen, der vorzugsweise knaufähnlich ausgebildet ist. Der Griff 56 ist vorzugsweise auf einer Oberseite der Schutzhaube 10 angeordnet. Der Nutzer der Werkzeugmaschine 100 kann die Schutzhaube 10 an ihrem Griff 56 anfassen und gegen den Widerstand eines Reiblagers aus einer Ausgangsposition nach hinten, d.h. gegen den Uhrzeigersinn, ziehen. Dadurch gelangt die Schutzhaube 10 in eine Arbeitsposition. Diese erste Drehbewegung wird durch den oberen Pfeil in der linken Bildhälfte von Figur 8 dargestellt.

In der Arbeitsposition bedeckt die Schutzhaube 10 bzw. ihr Schutzhaubenelement 14 einen Winkelbereich des Werkzeugs 12 der Werkzeugmaschine 100, der beim Ziffernblatt einer analogen Uhr der Zeit zwischen 8 Uhr und 14 Uhr entspricht. In der Ausgangs- oder Schutzposition deckt die Schutzhaube 10 vorzugsweise einen Winkelbereich des Werkzeugs 12 der Werkzeugmaschine 100 ab, der beim Ziffernblatt einer analogen Uhr der Zeit zwischen 9.30 Uhr und 15.30 Uhr entspricht (vgl. linke Bildhälfte der Figur 8).

In der rechten Bildhälfte der Figur 8 ist die Schutzhaube 10 in ihrer am weitesten nach hinten gezogenen Position dargestellt. Dabei deckt die Schutzhaube 10 einen Winkelbereich des Werkzeugs 12 der Werkzeugmaschine 100 ab, der beim Ziffernblatt einer analogen Uhr der Zeit zwischen 6.30 Uhr und 12.30 Uhr entspricht. In der rechten Bildhälfte der Figur 8 sind durch gestrichelte Linien vier Quadranten angedeutet, die mit den römischen Ziffern I, II, III und IV bezeichnet werden. Der erste Quadrant ist der Quadrant oben rechts und die Nummerierung erfolgt vorzugsweise entgegen dem Uhrzeigersinn. In der am weitesten nach hinten gezogenen Position der Schutzhaube 10 deckt die Schutzhaube 10 in etwa den zweiten und dritten Quadranten des Werkzeugs 12 der Werkzeugmaschine 100 ab. In der ebenfalls in der rechten Bildhälfte der Figur 8 dargestellten Arbeitsposition der Schutzhaube 10 deckt die Schutzhaube 10 in etwa den ersten und zweiten Quadranten des Werkzeugs 12 der Werkzeugmaschine 100 ab. Die jeweiligen Bewegungsmöglichkeiten der Schutzhaube 10 bzw. ihres Schutzhaubenelements 14 sind jeweils durch die Pfeile angedeutet. In der linken Bildhälfte der Figur 8 kann sich die Schutzhaube 10 aus der mittleren Position nach vorne oder nach hinten bewegen, d.h. mit dem Uhrzeigersinn oder gegen den Uhrzeigersinn. In der rechten Bildhälfte der Figur 8 kann sich die Schutzhaube 10 aus der am weitesten nach hinten gezogenen Position in zwei Stufen nach vorne bewegen, d.h. mit dem Uhrzeigersinn. Dadurch gelangt die Schutzhaube 10 in die Arbeitsposition oder in die Ausgangs- oder Schutzposition.

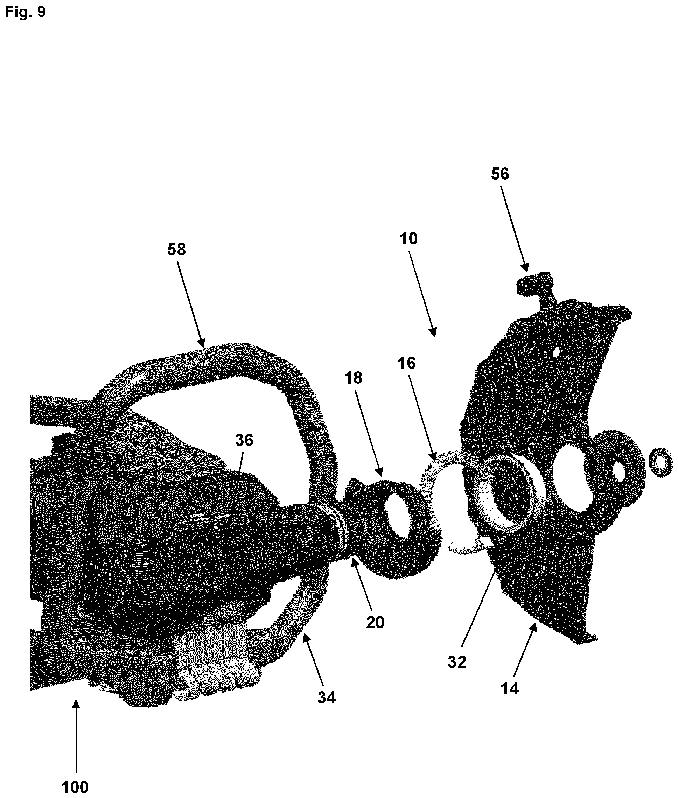

Figur 9 zeigt eine weitere Explosionsdarstellung einer möglichen Ausgestaltung der Schutzhaube 10 in Zusammenhang mit einer bevorzugten Ausgestaltung der Werkzeugmaschine 100. Die Werkzeugmaschine 100 weist einen Schutzrahmen 36 und einen Werkzeug- oder Schneidarm 34 auf. Darüber hinaus ist in Figur 9 ein Hebegriff 58 der Werkzeugmaschine 100 abgebildet. Die Schutzhaube 10 umfasst in dem in Figur 9 dargestellten Ausführungsbeispiel der Erfindung ein Schutzhaubenelement 14, ein Federelement 16, ein Gleitelement 32, ein drehbares Element 18 und ein Lagerelement 20, mit dem die Schutzhaube 10 an der Werkzeugmaschine 100 befestigt werden kann.

### Bezugszeichenliste

- 10: Schutzhaube
- 12: Werkzeug
- 14: Schutzhaubenelement
- 16: Federelement
- 18: drehbares Element zur Positionierung der Schutzhaube
- 20: Lagerelement
- 22: Drehachse
- 24: Drehachse der Schutzhaube
- 26: Drehachse des Werkzeugs
- 28: Drehpunkt der Schutzhaube
- 30: Drehpunkt des Werkzeugs
- 32: erstes Gleitelement
- 34: Werkzeugarm
- 36: Schutzrahmen
- 38: gefährlicher Bereich des Werkzeugs, der dem Nutzer zugewandt ist
- 40: Nut
- 42: erster Anschlag
- 44: zweiter Anschlag
- 46: dritter Anschlag
- 48: zweites Gleitelement
- 50: erstes Reibpaar
- 52: zweites Reibpaar
- 54: Hauptkörper der Werkzeugmaschine
- 56: Griff an der Schutzhaube
- 58: Hebegriff an der Werkzeugmaschine
- 100: Werkzeugmaschine

## Patentansprüche

1. Schutzhaube (10) für eine Werkzeugmaschine (100) mit einem rotierenden, scheibenförmigen Werkzeug (12)
**gekennzeichnet dadurch, dass**
die Schutzhaube (10) dazu eingerichtet ist, eine erste Drehbewegung und eine zweite Drehbewegung auszuführen, wobei die erste Drehbewegung reibgelagert erfolgt und die zweite Drehbewegung gleitgelagert erfolgt.

2. Schutzhaube (10) nach Anspruch 1
**gekennzeichnet dadurch, dass**
die Schutzhaube (10) eine erstes Drehlager und ein zweites Drehlager umfasst, wobei das erste Drehlager als Reiblager ausgebildet ist und das zweite Drehlager als Gleitlager ausgebildet ist.

3. Schutzhaube (10) nach Anspruch 1 oder 2
**gekennzeichnet dadurch, dass**
die Schutzhaube (10)
- ein Schutzhaubenelement (14) zur Aufnahme von mindestens einem Federelement (16),
- ein drehbares Element (18) zur Positionierung der Schutzhaube (10) und
- ein Lagerelement (20) umfasst, wobei das Lagerelement (20) eine Drehachse (22) für das drehbare Element (18) umfasst und das Federelement (16) dazu eingerichtet ist, eine Relativbewegung zwischen dem Schutzhaubenelement (14) und dem drehbaren Element (18) zu bewirken.

4. Schutzhaube (10) nach Anspruch 3
**gekennzeichnet dadurch, dass**
das erste Drehlager von dem Lagerelement (20) gebildet wird und das zweite Drehlager von dem drehbaren Element (18).

5. Schutzhaube (10) nach einem der Ansprüche 3 oder 4
**gekennzeichnet dadurch, dass**
das Schutzhaubenelement (14) und das drehbare Element (18) ein erstes Reibpaar (50) mit einer ersten Reibung bilden und das drehbare Element (18) und das Lagerelement (20) ein zweites Reibpaar (52) mit einer zweiten Reibung bilden, wobei die erste Reibung kleiner ist als die zweite Reibung.

6. Schutzhaube (10) nach einem der Ansprüche 3 bis 5
**gekennzeichnet dadurch, dass**
eine Position des Schutzhaubenelements (14) durch eine Relativbewegung zwischen dem Schutzhaubenelement (14) und dem drehbaren Element (18) und/oder durch eine Relativbewegung zwischen dem drehbaren Element (18) und dem Lagerelement (20) einstellbar ist.

7. Schutzhaube (10) nach einem der vorhergehenden Ansprüche
**gekennzeichnet dadurch, dass**
eine Drehachse (24) der Schutzhaube (10) mit einer Drehachse (26) des Werkzeugs (12) zusammenfällt.

8. Schutzhaube (10) nach einem der Ansprüche 1 bis 6
**gekennzeichnet dadurch, dass**
eine Drehachse (24) der Schutzhaube (10) im Wesentlichen parallel zu einer Drehachse (26) des Werkzeugs (12) verläuft.

9. Schutzhaube (10) nach einem der Ansprüche 1 bis 6
**gekennzeichnet dadurch, dass**
ein Drehpunkt (28) der Schutzhaube (10) nicht mit einem Drehpunkt (30) des Werkzeugs (12) zusammenfällt.

10. Schutzhaube (10) nach einem der Ansprüche 3 bis 9
**gekennzeichnet dadurch, dass**
die Schutzhaube (10) ein erstes Gleitelement (32) aufweist, wobei das erste Gleitelement (32) zwischen dem Schutzhaubenelement (14) und dem drehbaren Element (18) angeordnet vorliegt.

11. Schutzhaube (10) nach einem der vorhergehenden Ansprüche
**gekennzeichnet dadurch, dass**
eine Verbindung zwischen der Schutzhaube (10) und dem mindestens einen Federelement (16) zwischen der Schutzhaube (10) auf der einen Seite und einer Drehachse (26) des Werkszeugs (12), einem Werkzeugarm (34) und/oder einem Schutzrahmen (36) auf der anderen Seite gebildet wird.

12. Schutzhaube (10) nach einem der vorhergehenden Ansprüche
**gekennzeichnet dadurch, dass**
ein für den Nutzer der Werkzeugmaschine (100) gefährlicher Bereich (38) des Werkzeugs (12) der Werkzeugmaschine (100) zwischen der Schutzhaube (10) und der Werkzeugmaschine (100) angeordnet vorliegt, wobei dieser gefährliche Bereich (38) des Werkzeugs (12) durch die Schutzhaube (10) zu allen Betriebszeiten der Werkzeugmaschine (100) abgedeckt ist.

13. Schutzhaube (10) nach einem der vorhergehenden Ansprüche
**gekennzeichnet dadurch, dass**
die Schutzhaube (10) einen ersten Anschlag (42) und einen zweiten Anschlag (44) aufweist, wobei der erste Anschlag (42) dazu eingerichtet ist, eine Bewegung der Schutzhaube (10) in eine Vorwärtsrichtung zu begrenzen, und wobei der zweite Anschlag (44) dazu eingerichtet ist, eine Bewegung der Schutzhaube (10) in eine Rückwärtsrichtung zu begrenzen.

14. Schutzhaube (10) nach einem der vorhergehenden Ansprüche
**gekennzeichnet dadurch, dass**
die Schutzhaube (10) einen dritten Anschlag (46) aufweist, wobei der dritte Anschlag (46) dazu eingerichtet ist, zu verhindern, dass ein dem Nutzer der Werkzeugmaschine zugewandter Bereich (38) des Werkzeugs (12) der Werkzeugmaschine (100) frei liegt.

15. Werkzeugmaschine (100) mit einer Schutzhaube (10) nach einem der vorhergehenden Ansprüche
